# EUROPÄISCHE PATENTANMELDUNG

(11) **EP 2 927 427 A1**
(43) Veröffentlichungstag der Anmeldung: **07.10.2015**
(21) Anmeldenummer: 14163476.6
(22) Anmeldetag: 04.04.2014
(51) Int. Cl.: F01D 5/14

(54) **Gasturbinenschaufel**

(71) Anmelder: MTU Aero Engines AG, 80995 München (DE)
(72) Erfinder: Hübner, Norbert, 85221 Dachau (DE); Mahle, Inga, 81669 München (DE); Haid, Ulrich, 81827 München (DE); Körber, Kai, 85757 Karlsfeld (DE)

(57) **Zusammenfassung**

Die vorliegende Erfindung betrifft eine Schaufel (1) für eine Gasturbine, mit einer Vorder- und einer Hinterkante, die durch eine Druck- und eine Saugseite verbunden sind, wobei die Schaufel in wenigstens einem Abschnitt einer Stapelachse einen Querschnitt mit einem Profil mit einer gemeinsamen Profiltangente (P) an einen Vorder- und Hinterkantenbereich, einer Vorderkantentangente (V) an die Vorderkante, die senkrecht zu der gemeinsamen Profiltangente ist, einer Hinterkantentangente (H) an die Hinterkante, die senkrecht zu der gemeinsamen Profiltangente ist, und einer Skelettlinie (S) aufweist, die sich mit gleichem Abstand zu Druck- und Saugseite von einem Mittelpunkt (M_{V}) eines Vorderkantenkreises (K_{V}), bis zu einem Mittelpunkt (M_{H}) eines Hinterkantenkreises erstreckt, wobei eine Schaufeldicke (t) zwischen der Druck- und Saugseite sich ausgehend von einer Hinterkantendicke (t_{H}) an dem Mittelpunkt des Hinterkantenkreises in einem Skelettlinienabschnitt (a), dessen Länge wenigstens 15%, insbesondere wenigstens 19%, und höchstens 25%, insbesondere höchstens 21%, einer Länge (s) der Skelettlinie zwischen dem Mittelpunkt des Vorderkantenkreises und dem Mittelpunkt des Hinterkantenkreises beträgt, zu dem Mittelpunkt des Vorderkantenkreises hin auf wenigstens das Doppelte, insbesondere wenigstens auf das 2,5fache, der Hinterkantendicke vergrößert.

## Beschreibung

Die vorliegende Erfindung betrifft eine Schaufel für eine Gasturbine sowie eine Gasturbine mit wenigstens einer solchen Schaufel und ein Verfahren zum Auslegen einer solchen Schaufel.

Aus der WO 2012/147938 ist eine Gasturbinenschaufel mit einer asymmetrischen Hinterkante bekannt, deren Schaufeldicke zur Hinterkante hin relativ konstant ist.

Eine Aufgabe einer Ausführung der vorliegenden Erfindung ist es, eine Gasturbine zu verbessern.

Diese Aufgabe wird durch eine Schaufel mit den Merkmalen des Anspruchs 1 gelöst. Ansprüche 12, 13 stellen eine Gasturbine mit einer entsprechenden Schaufel bzw. ein Verfahren zum Auslegen einer solchen Schaufel unter Schutz. Vorteilhafte Ausführungsformen der Erfindung sind Gegenstand der Unteransprüche.

Eine Gasturbinenschaufel weist allgemein eine strömungsaufwärtige Vorderkante und eine strömungsabwärtige Hinterkante auf, die durch eine, insbesondere konkave, Druckseite und eine, insbesondere konvexe, Saugseite verbunden sind. Ein Schaufelblatt der Schaufel zur Strömungsumlenkung ist aus Profilquerschnitten gebildet, die längs einer Stapelachse übereinander angeordnet sind, die durch die Flächenschwerpunkte der Profilquerschnitte verläuft und in einer Ausführung der vorliegenden Erfindung, in Umfangs- und/oder Axialrichtung der Gasturbine gekrümmt oder, wenigstens im Wesentlichen, gerade, sein und sich in Radialrichtung der Gasturbine erstrecken oder gegen diese geneigt sein kann.

Die Schaufel weist in einem Querschnitt senkrecht zur Stapelachse oder der Radialrichtung ein Profil bzw. eine Außenkontur auf. Dieses Profil weist eine gemeinsame, druckseitenseitige Profiltangente an einen Vorder- und Hinterkantenbereich auf. Diese kann insbesondere durch eine Gerade gebildet werden bzw. sein, die von der Druckseite her an das Profil angelegt wird bzw. ist, vorzugsweise so, dass sie das Profil in wenigstens zwei Punkten berührt, ohne es zu schneiden, anschaulich also die Gerade, auf der das Profil druckseitig aufliegen würde. Ein Vorderkantenbereich im Sinne der vorliegenden Erfindung erstreckt sich in einer Ausführung, ausgehend von der Vorderkante, zur Hinterkante hin, insbesondere über höchstens 25% einer Profilsehnenlänge des Profils, ein Hinterkantenbereich entsprechend, ausgehend von der Hinterkante, zur Vorderkante hin, insbesondere über höchstens 25% der Profilsehnenlänge. Somit ergibt sich die gemeinsame Profiltangente an den Vorder- und Hinterkantenbereich im Sinne der vorliegenden Erfindung in einer Ausführung dadurch, dass man, ausgehend von der Vorderkante, auf der Druckseite einen Punkt auf dem Profil solange in Richtung Hinterkante verschiebt, bis die Tangente in dem Punkt an das Profil das Profil auch im Hinterkantenbereich berührt. Anschaulich kippt eine Tangente an das Profil, ausgehend von der Vorderkante, von der Druckseite her auf den Hinterkantenbereich und bildet dann die gemeinsame Profiltangente.

Das Profil weist eine Vorderkantentangente an die Vorderkante auf, die senkrecht zu der gemeinsamen Profiltangente ist. Diese kann anschaulich insbesondere durch eine Normale zu der gemeinsamen Profiltangente gebildet werden bzw. sein, die in Strömungsrichtung an das Profil angelegt wird bzw. ist. In entsprechender Weise weist das Profil eine zu der Vorderkantentangente parallele Hinterkantentangente an die Hinterkante auf, die senkrecht zu der gemeinsamen Profiltangente ist und anschaulich insbesondere durch eine Normale zu der gemeinsamen Profiltangente gebildet werden bzw. sein kann, die entgegen der Strömungsrichtung an das Profil angelegt wird bzw. ist.

Sofern das Profil in einem Berührpunkt mit der gemeinsamen Profiltangente, in einem Berührpunkt mit der Vorderkantentangente und/oder in einem Berührpunkt mit der Hinterkantentangente eine eindeutige Tangente aufweist, insbesondere also stetig differenzierbar ist, kann die gemeinsamen Profiltangente, Vorderkantentangente bzw. Hinterkantentangente diese eindeutige bzw. mathematische Tangente sein. Sofern das Profil in dem Berührpunkt keine eindeutige Tangente aufweist, insbesondere in dem Berührpunkt eine Ecke aufweist, ist die gemeinsamen Profiltangente, wie vorstehend erläutert, insbesondere eine Gerade, auf der die Druckseite des Profils aufliegen würde, die Vorderkante die hierzu senkrechte Gerade, die in Strömungsrichtung an das Profil angelegt ist, und die Hinterkantentangente die zu der gemeinsamen Profiltangente senkrechte Gerade, die entgegen der Strömungsrichtung an das Profil angelegt ist. Insofern ist der Begriff "Tangente" vorliegend nicht im streng mathematischen Sinne zu verstehen, sondern verallgemeinernd so wie vorstehend definiert als "Berührende" bzw. "An-/Aufliegende".

Der Kreis, dessen Mittelpunkt im Schnittpunkt der Normalen bzw. Senkrechten im Berührpunkt der Vorderkantentangente an das Profil mit einer Profilmittellinie, die sich mit gleichem Abstand zu Druck- und Saugseite durch das Profil erstreckt, liegt und diesen Berührpunkt enthält, definiert einen Vorderkantenkreis im Sinne der vorliegenden Erfindung. In entsprechender Weise definiert, insbesondere bei einer gekrümmten Hinterkante, der Kreis, dessen Mittelpunkt im Schnittpunkt der Normalen bzw. Senkrechten im Berührpunkt der Hinterkantentangente an das Profil mit der Profilmittellinie liegt und diesen Berührpunkt enthält, einen Hinterkantenkreis im Sinne der vorliegenden Erfindung. Insbesondere bei einer eckigen bzw. abgeschnittenen Hinterkante und/oder wenn diese Normale die Profilmittellinie nicht schneidet, definiert der Kreis, der wenigstens einen Punkt der Druckseite und wenigstens einen Punkt der Saugseite enthält, und dessen Mittelpunkt im Schnittpunkt der Profilmittellinie mit der abgeschnittenen Hinterkante liegt und/oder der einen minimalen Durchmesser aufweist, einen Hinterkantenkreis im Sinne der vorliegenden Erfindung. Das Profil weist eine Skelettlinie auf, die im Sinne der vorliegenden Erfindung so definiert ist, dass sie sich mit gleichem Abstand zu Druck- und Saugseite von dem Mittelpunkt des Vorderkantenkreises bis zu dem Mittelpunkt des Hinterkantenkreises erstreckt. Die Skelettlinie bildet somit einen wohldefinierten Abschnitt der Profilmittellinie, die sich mit gleichem Abstand zu Druck- und Saugseite durch das Profil erstreckt.

Der Abstand zwischen der Druck- und Saugseite an einer Stelle der Skelettlinie definiert eine Schaufeldicke an dieser Stelle der Skelettlinie im Sinne der vorliegenden Erfindung. Diese kann anschaulich insbesondere dem Durchmesser eines in das Profil einbeschriebenen bzw. die Druck- und Saugseite jeweils in wenigstens einem Punkt berührenden Kreises, der Druck- und Saugseite nicht schneidet und dessen Mittelpunkt an dieser Stelle der Skelettlinie liegt, entsprechen.

Überraschenderweise hat sich herausgestellt, dass ein bestimmter Schaufeldickenzuwachs in einem spezifischen Endbereich wenigstens eines Abschnitts des Schaufelblattes die Performance der Schaufel verbessern, insbesondere ein unerwünschtes Ablösen der Strömung an der Hinterkante reduzieren kann.

(Entsprechend wird nach einem Aspekt der vorliegenden Erfindung eine Schaufel vorgeschlagen, deren Profil in wenigstens einem Abschnitt der Stapelachse eine Schaufeldicke aufweist, die sich ausgehend von einer Hinterkantendicke an dem Mittelpunkt des Hinterkantenkreises in einem Skelettlinienabschnitt, dessen Länge wenigstens 15%, insbesondere wenigstens 19%, und höchstens 25%, insbesondere höchstens 21%, einer Länge der Skelettlinie zwischen dem Mittelpunkt des Vorderkantenkreises und dem Mittelpunkt des Hinterkantenkreises beträgt, zu dem Mittelpunkt des Vorderkantenkreises hin bzw. in Richtung auf den Mittelpunkt des Vorderkantenkreises zu auf wenigstens das Doppelte, insbesondere wenigstens auf das 2,5fache, der Hinterkantendicke vergrößert.

In einer Ausführung nimmt die Schaufeldicke ausgehend von der Hinterkantendicke in dem Skelettlinienabschnitt zu dem Mittelpunkt des Vorderkantenkreises hin monoton, insbesondere streng monoton, zu. Unter einer (streng) monotonen Zunahme wird vorliegend in fachüblicher Weise verstanden, dass die Schaufeldicke an jeder ersten Stelle der Skelettlinie, die auf der Skelettlinie gemessen näher zu dem Mittelpunkt des Vorderkantenkreises hin liegt als eine beliebige zweite Stelle der Skelettlinie, stets wenigstens so groß (monoton) bzw. stets größer (streng monoton) ist als die Schaufeldicke an der zweiten Stelle.

Hierdurch kann in einer Ausführung die Performance der Schaufel weiter verbessert, insbesondere ein unerwünschtes Ablösen der Strömung an der Hinterkante stärker reduzieren werden.In einer Ausführung nimmt die Schaufeldicke in einem hinterkantennäheren Bereich des Skelettlinienabschnitts, der von dem Mittelpunkt des Hinterkantenkreises ausgeht und dessen Länge höchstens 50% der Länge des Skelettlinienabschnitts beträgt, zu dem Mittelpunkt des Vorderkantenkreises hin linear zu. Durch eine solche nur hinterkantenseitig lineare Schaufeldickenänderung kann ein Übergang in die restliche Druck- bzw. Saugseite verbessert werden. Gleichermaßen kann in einer anderen Ausführung die Schaufeldicke in einem hinterkantennäheren Bereich des Skelettlinienabschnitts, der von dem Mittelpunkt des Hinterkantenkreises ausgeht und dessen Länge wenigstens 50%, insbesondere bis zu 100% der Länge des Skelettlinienabschnitts beträgt, zu dem Mittelpunkt des Vorderkantenkreises hin linear zunehmen. Durch eine solche längere lineare Schaufeldickenänderung kann die Herstellung und/oder Strukturcharakteristik verbessert werden.

In einer Ausführung beträgt eine maximale Schaufeldicke wenigstens 15% und/oder höchstens 30% der Länge der Skelettlinie zwischen dem Mittelpunkt des Vorderkantenkreises und dem Mittelpunkt des Hinterkantenkreises. Bei solchen dickeren Schaufeln hat es sich als besonders vorteilhaft herausgestellt, wenn die Schaufeldicke in einem vorderkantennäheren Bereich des Skelettlinienabschnitts, der sich bis zu einem vorderkantennäheren Ende des Skelettlinienabschnitts erstreckt und dessen Länge wenigstens 50% der Länge des Skelettlinienabschnitts beträgt, zu dem Mittelpunkt des Vorderkantenkreises hin monoton zunehmend zunimmt. Mit anderen Worten ist der Schaufeldickenverlauf längs der Skelettlinie in dem Skelettlinienabschnitt oder wenigstens dessen vorderkantennäherem Teil konkav.

In einer anderen Ausführung beträgt ein maximale Schaufeldicke wenigstens 4% und/oder höchstens 15% der Länge der Skelettlinie zwischen dem Mittelpunkt des Vorderkantenkreises und dem Mittelpunkt des Hinterkantenkreises. Bei solchen dünneren Schaufeln hat es sich als besonders vorteilhaft herausgestellt, wenn die Schaufeldicke in einem vorderkantennäheren Bereich des Skelettlinienabschnitts, der sich bis zu einem vorderkantennäheren Ende des Skelettlinienabschnitts erstreckt und dessen Länge wenigstens 50% der Länge des Skelettlinienabschnitts beträgt, zu dem Mittelpunkt des Vorderkantenkreises hin monoton abnehmend zunimmt. Mit anderen Worten ist der Schaufeldickenverlauf längs der Skelettlinie in dem Skelettlinienabschnitt oder wenigstens dessen vorderkantennäherem Teil konvex. Eine solche monoton abnehmende Zunahme kann auch bei dickeren Schaufeln vorteilhaft sein. Daher nimmt die Schaufeldicke in einer Ausführung, in der eine maximale Schaufeldicke wenigstens 15% und/oder höchstens 30% der Länge der Skelettlinie zwischen dem Mittelpunkt des Vorderkantenkreises und dem Mittelpunkt des Hinterkantenkreises beträgt, in einem vorderkantennäheren Bereich des Skelettlinienabschnitts, der sich bis zu einem vorderkantennäheren Ende des Skelettlinienabschnitts erstreckt und dessen Länge wenigstens 50% der Länge des Skelettlinienabschnitts beträgt, zu dem Mittelpunkt des Vorderkantenkreises hin monoton zunehmend zu.

In einer Ausführung beträgt die Hinterkantendicke höchstens 0,5 mm, insbesondere höchstens 0,4 mm, vorzugsweise höchstens 0,35 mm. Zusätzlich oder alternativ beträgt ein Keilwinkel an der Hinterkante wenigstens 9° und/oder höchstens 17°. Diese Werte haben sich als besonders vorteilhaft herausgestellt.

In einer Ausführung erstreckt sich der Abschnitt der Stapelachse, in dem das Profil wie vorstehend erläutert ausgebildet ist, über wenigstens 25%, insbesondere wenigstens 75%, einer Schaufelblatthöhe der Schaufel. Insbesondere an einem Übergang des Schaufelblattes in einen Schaufelfuß und/oder eine deckbandlose Schaufelspitze oder ein Schaufeldeckband kann das Profil ebenfalls wie vorstehend erläutert ausgebildet sein, insbesondere, um die aerodynamische Performance weiter zu verbessern, oder hiervon abweichend ausgebildet sein, insbesondere eine geringere Schaufelaufdickung in Richtung auf die Vorderkante zu aufweisen, um die Herstellung und/oder thermische und/oder mechanische Performance weiter zu verbessern. Entsprechend erstreckt sich in einer Ausführung der Abschnitt der Stapelachse, in dem das Profil wie vorstehend erläutert ausgebildet ist, von wenigstens 30% bis wenigstens 70% einer Schaufelblatthöhe der Schaufel bzw. wenigstens in einem mittleren Bereich des Schaufelblattes.

Eine erfindungsgemäße Schaufel ist in einer Ausführung eine stationäre bzw. gehäusefeste, insbesondere feststehende oder bewegliche, Leitschaufel für eine Verdichter-oder Turbinenstufe der Gasturbine bzw. Leitschaufel einer Verdichter- oder Turbinenstufe einer erfindungsgemäßen Gasturbine. In einer anderen Ausführung ist eine erfindungsgemäße Schaufel eine drehbar gelagerte bzw. rotorfeste Laufschaufel für eine Verdichter- oder Turbinenstufe der Gasturbine bzw. Laufschaufel einer Verdichter- oder Turbinenstufe einer erfindungsgemäßen Gasturbine. Überraschenderweise kann ein erfindungsgemäßes Profil die Performance sowohl von Leit- als auch von Laufschaufeln sowohl von Verdichter- als auch von Turbinenstufen verbessern.

Mit besonderem Vorteil wird eine erfindungsgemäße Schaufel in einem Flugtriebwerk eingesetzt.

Nach einem Aspekt der vorliegenden Erfindung wird das Profil einer Schaufel, insbesondere einer Leit- oder Laufschaufel einer Verdichter- oder Turbinenstufe einer Gasturbine, insbesondere eines Flugtriebwerks, gezielt so gestaltet, dass die Schaufeldicke sich ausgehend von der Hinterkantendicke in dem Skelettlinienabschnitt zu dem Mittelpunkt des Vorderkantenkreises hin auf wenigstens das Doppelte, insbesondere wenigstens auf das 2,5fache, der Hinterkantendicke vergrößert. In einer Weiterbildung wird das Profil gezielt so gestaltet, dass sich die vorstehend erläuterte Schaufel ergibt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Profilquerschnitt zur Erläuterung verschiedener Begriffe; und
- Fig. 2: den Verlauf einer Schaufeldicke über einer Länge einer Skelettlinie eines Profils nach einer Ausführung der vorliegenden Erfindung.

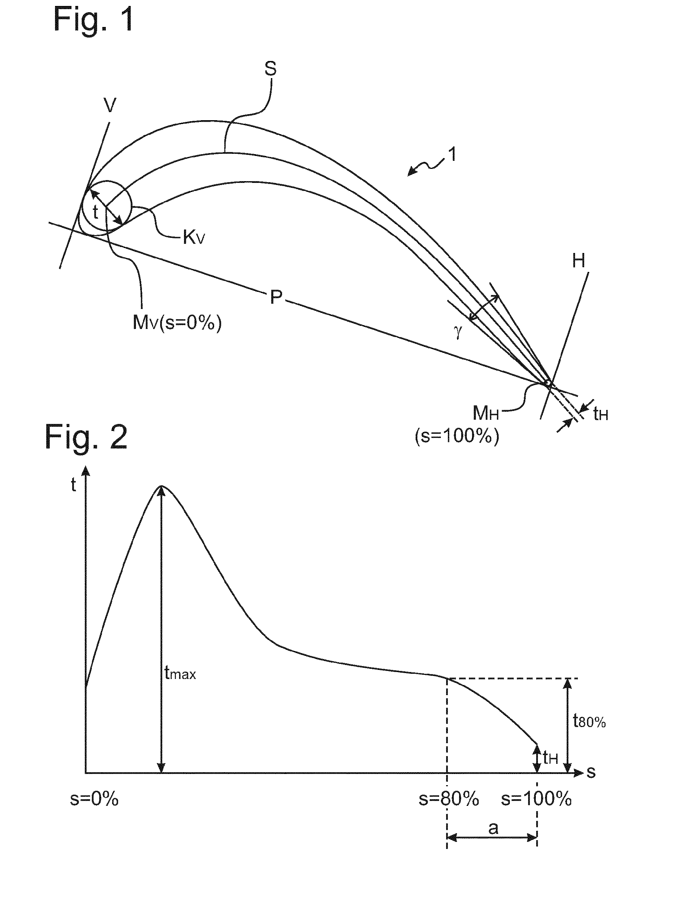

Fig. 1 zeigt, teilweise schematisiert einen Profilquerschnitt eines Schaufelblattes einer Leit- oder Laufschaufel 1 einer Gasturbine.

Das Profil weist eine Vorderkante (links in Fig. 1) und eine Hinterkante (rechts in Fig. 1), die durch eine Druckseite (oben in Fig. 1) und eine Saugseite (unten in Fig. 1) verbunden sind, sowie einen Keilwinkel y an der Hinterkante von 16° auf.

Mit P ist eine gemeinsame Profiltangente an die Vorder- und Hinterkante bezeichnet, mit V eine Vorderkantentangente an die Vorderkante, die senkrecht zu der gemeinsamen Profiltangente ist, mit H eine Hinterkantentangente an die Hinterkante, die senkrecht zu der gemeinsamen Profiltangente ist, und mit S eine Skelettlinie, die sich mit gleichem Abstand zu Druck- und Saugseite von einem Mittelpunkt M_{V} eines in das Profil einbeschriebenen Vorderkantenkreises K_{V}, der mit dem Profil die Vorderkantentangente gemeinsam hat, bis zu einem Mittelpunkt M_{H} eines in analoger Weise in das Profil einbeschriebenen Hinterkantenkreises erstreckt, der mit dem Profil die Hinterkantentangente gemeinsam hat.

Fig. 2 zeigt den Verlauf einer Schaufeldicke t (vgl. Fig. 1) über der Skelettlinie(nlänge) s eines Profils nach einer Ausführung der vorliegenden Erfindung von dem Mittelpunkt M_{V} des Vorderkantenkreises (s=0%) bis zu dem Mittelpunkt M_{H} des Hinterkantenkreises (s=100%).

Man erkennt, dass die Schaufeldicke t sich ausgehend von einer Hinterkantendicke t_{H} an dem Mittelpunkt des Hinterkantenkreises (s=100%), die im Ausführungsbeispiel insbesondere 0,3 mm betragen kann, in einem Skelettlinienabschnitt a, dessen Länge 20% der Länge der Skelettlinie zwischen dem Mittelpunkt des Vorderkantenkreises und dem Mittelpunkt des Hinterkantenkreises beträgt (a = [0,8s, s] ⇒ |a| = (s - 0,8s) = 0,2s), zu dem Mittelpunkt des Vorderkantenkreises hin (nach links in Fig. 2) auf eine Schaufeldicke t_{80%} vergrößert, die mehr als das 2,5fache der Hinterkantendicke t_{H} beträgt (t_{80%} >2,5t_{H}).

Man erkennt weiter, dass die Schaufeldicke ausgehend von der Hinterkantendicke in dem Skelettlinienabschnitt zu dem Mittelpunkt des Vorderkantenkreises hin streng monoton zunimmt.

Dabei kann die Schaufeldicke in einer nicht dargestellten Abwandlung in einem hinterkantennäheren Bereich des Skelettlinienabschnitts (rechts in Fig. 1), der von dem Mittelpunkt des Hinterkantenkreises ausgeht und dessen Länge wenigstens oder höchstens 50% der Länge des Skelettlinienabschnitts beträgt, zu dem Mittelpunkt des Vorderkantenkreises hin linear zunehmen.

In der dargestellten Ausführung nimmt die Schaufeldicke in dem Skelettlinienabschnitt a zu dem Mittelpunkt des Vorderkantenkreises hin (nach links in Fig. 2) monoton abnehmend zu.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schaufel(profil(querschnitt))
- a: Skelettlinienabschnitt
- H: Hinterkantentangente
- K_{V}: Vorderkantenkreis
- M_{H}: Mittelpunkt Hinterkantenkreis
- M_{V}: Mittelpunkt Vorderkantenkreis
- P: gemeinsame Profiltangente
- S: Skelettlinie
- s: Skelettlinienlänge
- t: Schaufeldicke
- t_{H}: Hinterkantendicke
- tₘₐₓ: maximale Schaufeldicke
- t_{80%}: Schaufeldicke am vorderkantennäheren Ende des Skelettlinienabschnitts a
- V: Vorderkantentangente

## Patentansprüche

1. Schaufel (1) für eine Gasturbine,
mit einer Vorder- und einer Hinterkante, die durch eine Druck- und eine Saugseite verbunden sind,
wobei die Schaufel in wenigstens einem Abschnitt einer Stapelachse einen Querschnitt mit einem Profil mit
einer gemeinsamen Profiltangente (P) an einen Vorder- und Hinterkantenbereich,
einer Vorderkantentangente (V) an die Vorderkante, die senkrecht zu der gemeinsamen Profiltangente ist,
einer Hinterkantentangente (H) an die Hinterkante, die senkrecht zu der gemeinsamen Profiltangente ist, und
einer Skelettlinie (S) aufweist, die sich mit gleichem Abstand zu Druck- und Saugseite
von einem Mittelpunkt (M_{V}) eines Vorderkantenkreises (K_{V}),
bis zu einem Mittelpunkt (M_{H}) eines Hinterkantenkreises erstreckt,
**dadurch gekennzeichnet, dass**
eine Schaufeldicke (t) zwischen der Druck- und Saugseite sich ausgehend von einer Hinterkantendicke (t_{H}) an dem Mittelpunkt des Hinterkantenkreises in einem Skelettlinienabschnitt (a), dessen Länge wenigstens 15%, insbesondere wenigstens 19%, und höchstens 25%, insbesondere höchstens 21%, einer Länge (s) der Skelettlinie zwischen dem Mittelpunkt des Vorderkantenkreises und dem Mittelpunkt des Hinterkantenkreises beträgt, zu dem Mittelpunkt des Vorderkantenkreises hin auf wenigstens das Doppelte, insbesondere wenigstens auf das 2,5fache, der Hinterkantendicke vergrößert.

2. Schaufel nach dem vorhergehenden Anspruch, **dadurch gekennzeichnet, dass** die Schaufeldicke ausgehend von der Hinterkantendicke in dem Skelettlinienabschnitt (a) zu dem Mittelpunkt des Vorderkantenkreises hin monoton, insbesondere streng monoton, zunimmt.

3. Schaufel nach dem vorhergehenden Anspruch, **dadurch gekennzeichnet, dass** die Schaufeldicke in einem hinterkantennäheren Bereich des Skelettlinienabschnitts, der von dem Mittelpunkt des Hinterkantenkreises ausgeht und dessen Länge wenigstens oder höchstens 50% der Länge des Skelettlinienabschnitts beträgt, zu dem Mittelpunkt des Vorderkantenkreises hin linear zunimmt.

4. Schaufel nach einem der vorhergehenden Ansprüche, **dadurch gekennzeichnet, dass** eine maximale Schaufeldicke (tₘₐₓ) wenigstens 15% und/oder höchstens 30% der Länge der Skelettlinie zwischen dem Mittelpunkt des Vorderkantenkreises und dem Mittelpunkt des Hinterkantenkreises beträgt.

5. Schaufel nach dem vorhergehenden Anspruch, **dadurch gekennzeichnet, dass** die die Schaufeldicke in einem vorderkantennäheren Bereich des Skelettlinienabschnitts (a), der sich bis zu einem vorderkantennäheren Ende des Skelettlinienabschnitts (a) erstreckt und dessen Länge wenigstens 50% der Länge des Skelettlinienabschnitts (a) beträgt, zu dem Mittelpunkt des Vorderkantenkreises hin monoton zu- oder abnehmend zunimmt.

6. Schaufel nach einem der vorhergehenden Ansprüche, **dadurch gekennzeichnet, dass** eine maximale Schaufeldicke (tₘₐₓ) wenigstens 4% und/oder höchstens 15% der Länge der Skelettlinie zwischen dem Mittelpunkt des Vorderkantenkreises und dem Mittelpunkt des Hinterkantenkreises beträgt.

7. Schaufel nach dem vorhergehenden Anspruch, **dadurch gekennzeichnet, dass** die Schaufeldicke in einem vorderkantennäheren Bereich des Skelettlinienabschnitts (a), der sich bis zu einem vorderkantennäheren Ende des Skelettlinienabschnitts (a) erstreckt und dessen Länge wenigstens 50% der Länge des Skelettlinienabschnitts (a) beträgt, zu dem Mittelpunkt des Vorderkantenkreises hin monoton abnehmend zunimmt.

8. Schaufel nach einem der vorhergehenden Ansprüche, **dadurch gekennzeichnet, dass** der Abschnitt der Stapelachse sich über wenigstens 25%, insbesondere wenigstens 75%, einer Schaufelblatthöhe der Schaufel erstreckt.

9. Schaufel nach einem der vorhergehenden Ansprüche, **dadurch gekennzeichnet, dass** die Hinterkantendicke höchstens 0,5 mm, insbesondere höchstens 0,4 mm, vorzugsweise höchstens 0,35 mm beträgt.

10. Schaufel nach einem der vorhergehenden Ansprüche, **dadurch gekennzeichnet, dass** ein Keilwinkel an der Hinterkante wenigstens 9° und/oder höchstens 17° beträgt.

11. Schaufel nach einem der vorhergehenden Ansprüche, **dadurch gekennzeichnet, dass** die Schaufel eine Leit- oder Laufschaufel für eine Verdichter- oder Turbinenstufe der Gasturbine ist.

12. Gasturbine, insbesondere Flugtriebwerk, mit wenigstens einer Schaufel nach einem der vorhergehenden Ansprüche.

13. Verfahren zum Auslegen einer Schaufel nach einem der vorhergehenden Ansprüche, **dadurch gekennzeichnet, dass** das Profil so gestaltet wird, dass die Schaufeldicke (t) sich ausgehend von der Hinterkantendicke (t_{H}) in dem Skelettlinienabschnitt (a) zu dem Mittelpunkt (M_{V}) des Vorderkantenkreises (K_{V}) hin auf wenigstens das Doppelte, insbesondere wenigstens auf das 2,5fache, der Hinterkantendicke (t_{H}) vergrößert.
